Europäisches Patentamt

European Patent Office

Office européen des brevets

(11) Publication number: 0 127 450
B1

# EUROPEAN PATENT SPECIFICATION

(45) Date of publication of patent specification: 09.08.89

(51) Int. Cl.⁴: $G\ 02\ C\ 7/00$

(21) Application number: 84303525.4

(22) Date of filing: 24.05.84

(54) Cosmetic contact lens.

(30) Priority: 25.05.83 US 497799

(43) Date of publication of application:
05.12.84 Bulletin 84/49

(45) Publication of the grant of the patent:
09.08.89 Bulletin 89/32

(84) Designated Contracting States:
AT BE CH DE FR GB IT LI NL SE

(56) References cited:
WO-A-83/03480
GB-A- 510 946
US-A-3 454 332
US-A-3 712 718
US-A-4 447 474
(73) Proprietor: Neefe, Charles William
2701 Rebecca Big Spring
Howard Texas 79720 (US)

(72) Inventor: Neefe, Charles William
2701 Rebecca Big Spring
Howard Texas 79720 (US)

(74) Representative: Allam, Peter Clerk et al
LLOYD WISE, TREGEAR & CO. Norman House
105-109 Strand
London WC2R 0AE (GB)

Courier Press, Leamington Spa, England.

## Description

This invention relates to contact lenses and methods for manufacturing contact lenses, and more particularly to a cosmetic contact lens which alters the apparent color of the iris.

Several lens types have been produced in an effort to achieve an apparent color change of the eye.

One attempt employed a laminated structure with a painted opaque replica of the iris sandwiched between a clear and an opaque plastic member. The result is a thick heavy lens which is difficult to fabricate and difficult to wear. A later attempt employed a colored opaque porous member surrounding a clear cylinder from which the lens was cut by lathing. This resulted in a lens having a pupil and iris pattern and the porous member having the tendency to flake and chip at the edge as shown in U.S. Patent No. 3,454,332. A third generation of colored lenses provided a thin layer of colored opaque markings placed in a clear material. The opaque colored marking radiated from the center of the clear material in a geometric pattern.

US—A—3712718 discloses a cosmetic contact lens having a transparent central area and an irregular pattern of colored striations in the surrounding peripheral zone which may be formed by a reflective pigment. Due to the presence of this coloring matter, the striations have substantially less light transmissivity than the transparent central area and serve to accentuate or highlight the wearer's iris. The contact lens of US—A—3712718 is thus not designed to provide for an apparent eye color change.

The present invention has an advantage over previously developed lenses in that the entire lens area is transparent providing peripheral vision and allowing the natural iris pattern to be visible through the lens, whilst at the same time altering the apparent color of the iris.

In accordance with the present invention there is provided a cosmetic contact lens which changes the apparent color of the eye upon which it is worn comprising:

a circular transparent colored central area; and
a circular semi-transparent area surrounding said circular transparent colored central area, said circular semi-transparent area including a transparent colored material having a plurality of light reflecting particles dispersed therein and spaced apart from one another such that the transmittance of the semi-transparent area is from about 90% to 50% of that of the transparent colored central area, and from about 10% to 50% of the light entering said semitransparent area is reflected from the lens by said light reflecting particles, whereby the reflected light will have the color of said transparent colored material in which said light reflecting particles are dispersed.

Thus, the use of this invention includes a small amount of light reflecting finely divided particles, such as finely ground oyster shell, titanium oxide crystals, zinc oxide crystals or mica placed in a matrix of transparent colored lens material of a substantially lower refractive index so that the reflected light from the iris area will have the color of the lower refractive index media. A colored transparent central pupil area is provided so that the lens will have a natural appearance when in place on the eye. The light entering the transparent colored pupil area will enter the eye and be absorbed and give a dark natural appearance to the pupil area.

Peripheral vision is also undisturbed through use of the present lens. The macular area is responsible for the high performance visual activity; however, the peripheral area of the retina is more sensitive to lower levels of illumination. Therefore, any loss of light in the peripheral area is not apparent to the wearer provided the transparent pupil area and semi-transparent peripheral area are the same color. A clear pupil surrounded by a blue periphery will produce a distracting blue color in the peripheral fields. This is due to color comparison between central and peripheral fields. This has been a problem with earlier attempts to make cosmetic contact lenses and is overcome by adding the transparent color to the pupil area.

Brief description of the drawings

Figure 1 shows an open top cylinder in section;
Figure 2 shows the open top cylinder filled with a colored transparent material in section;
Figure 3 shows the lens blank from the side in section;
Figure 4 shows the lens blank from the front in section;
Figure 5 shows the open top cylinder in section including a peripheral area; and
Figure 6 shows the light reflecting particles imbedded in the transparent colored matrix.

The lens of the present invention may be in the form of hydrophilic, gas permeable or conventional hard lenses.

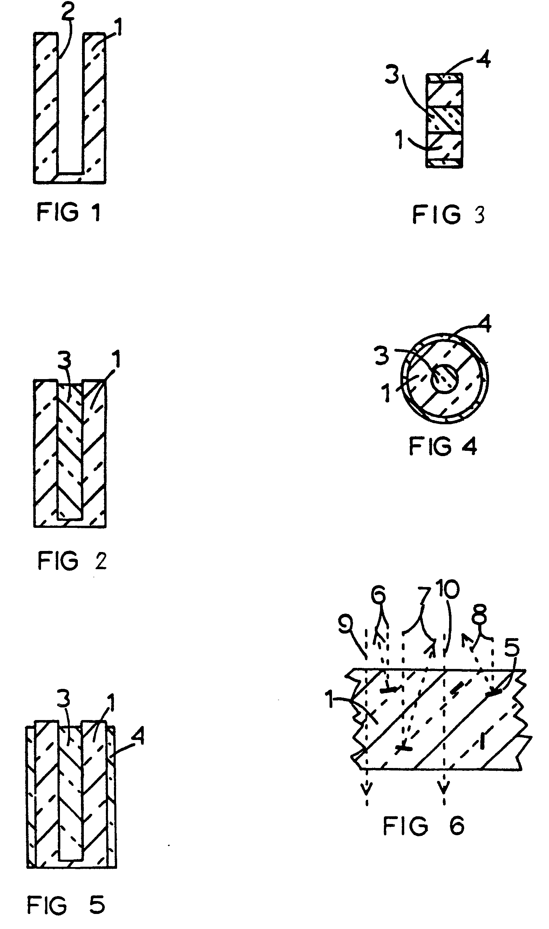

Referring to Figure 1, one embodiment of the present invention will now be described. The selected monomeric material, such as hydroxyethylmethacrylate and a suitable catalyst, such as benzoyl peroxide to achieve polymerization are used. Pigments or a dye of the selected color, such as F.D. and C green, Number 6, and the preselected amount of the reflecting particles in accordance with the present invention are added to the monomer before polymerization and cast in the form of an open top cylinder 1 having an inner hole 2. The diameter of hole 2 is approximately equal to the diameter of the intended pupil in the lens. The light reflecting particles are selected having a preferred particle size of from 0.1 μm to 20 μm. An increase in the quantity of reflecting particles will provide an increase in the apparent color change provided and a reduction in the visibility through the color change segment of the lens. The light reflecting particles are present preferably in amounts ranging from 0.1% to 5% by weight. Typical formulations are as follows.

Example 1
The following ingredients are mixed in the order given.

| | |
|---|---|
| hydroxyethylmethacrylate-monomer | 100 g. |
| ethylene dimethacrylate-crosslinker | 0.02 g |
| benzoyl peroxide-catalyst | 30 mg. |
| F.D. and C green, Number 6-colorant | 20 mg. |
| titanium oxide-reflecting particles | 35 mg. |

Example 2
A soft contact lens blank is prepared by casting the following mixture. The ingredients are thoroughly mixed in the order given (percent by weight).

| | |
|---|---|
| ethylene glycol monomethacrylate-hydrophilic monomer | 92% |
| diethylene glycol monomethacrylate-crosslinker | 3.0% |
| methacrylic acid-hydrating agent | 4.0% |
| intraplast blue 2GLN-colorant | .25% |
| finely ground oyster shells-reflecting particles | .5% |

Example 3
The following ingredients are mixed in the order given (percent by weight).

| | |
|---|---|
| ethylene glycol monomethacrylate-hydrogel monomer | 92% |
| 1,4 cyclohexanedimethyl 1,4 dimethacrylate-crosslinker | 2.5% |
| methacrylic acid | 4.5% |
| LS 597 brown-colorant | .3% |
| zinc oxide-reflecting particles | .45% |
| 2,5 dimethyl-2,5-bis(2-ethyl hexoyl peroxy) hexane-initiator | .25% |

Referring to Figure 2, a mixture of the selected monomer and colorant 3 to which a suitable catalyst has been added is placed in the cylinder 1 and allowed to polymerize.

Referring now to Figures 3, 4 and 5, a third, clear casting or flange 4 is made from the desired monomer to which the suitable catalyst has been added and allowed to polymerize around the cylinder 1. Casting 4 is provided to enlarge the diameter of the lens to be larger than the diameter of the iris. This enlarged diameter ensures that any colored portion of the lens does not extend beyond the lymbus which would be distracting and unacceptable in use.

Cylinder 1 is cut into discs having a transparent colored center 3 which is surrounded by a colored segment having light reflecting particles imbedded in a colored transparent matrix 1. The peripheral segment 4 is composed of clear transparent material. Contact lenses are cut from these discs (lens blanks) by methods such as lathing, well known to the art. The finished xerogel lens is then hydrated for 4 hours with agitation in normal silane at 80°C to provide the hydrogel lens.

Referring now to Figure 6, the light reflecting particles 5 are imbedded in transparent colored polymer 1. Light rays 9 and 10 not reaching one of the reflecting particles passes through the lens as colored light to illuminate the iris. The light rays 6, 7 and 8 impinging on the surface of the reflecting particles are reflected forward from the front of the lens as colored light. The eye takes on the apparent color of the reflected light. The transparent colored central area 3 passes light through the lens and into the eye through the pupil. Any required refractive power is provided in the lens to correct the refractive errors the wearer may have.

The present lenses may be used as cosmetics for adding color to the eye for special events or for wear wihh special clothing, therefore, they may not be worn every day, but kept in storage for long periods of time. This fact brings out the problem of sanitation in storage and use. To overcome this problem antimicrobial agents must be used either in the storage solutions or incorporated in the lens material. Antimicrobial agents may be added to the monomer before polymerization and locked into the polymeric structure of the lens. These agents prevent the growth of micro-organisms on the lens surface and eliminate the need for disinfecting. Examples of useful antimicrobial agents are: 3-(trimethoxy-silyl) propylocta decyldimethyl ammonium chloride, known as Dow Corning 5700 and hexachlorophene.

An alternative embodiment of the present method includes forming the monomer and colorant rod 3 prior to formation of cylinder 1. Rod 3 may be formed using a lathe such that the walls of rod 3 are true and smoothed. A polished surface is not required. Cylinder 1 is then cast around rod 3. Cylinder 1, as previously described, include the monomer and colorant mixture as used for rod 3 in addition to the light reflecting particles 5 (Figure 6) such as, for example, mica or finely ground oyster shells. Peripheral area 4 is then cast around cylinder 1 as previously stated.

**Claims**

1. A cosmetic contact lens which changes the apparent color of the eye upon which it is worn comprising:
a circular transparent colored central area; and
a circular semi-transparent area surrounding said circular transparent colored central area, said circular semi-transparent area including a transparent colored material having a plurality of light reflecting particles dispersed therein and spaced apart from one another such that the transmittance of the semi-transparent area is from about 90% to 50% of that of the transparent colored central area, and from about 10% to 50% of the light entering said semitransparent area is reflected from the lens by said light reflecting particles, whereby the reflected light will have the color of said transparent colored material in which said light reflecting particles are dispersed.

2. The contact lens of Claim 1, further comprising a circular clear transparent area surrounding said circular semi-transparent area.

3. The contact lens of Claims 1 or Claim 2, wherein said circular transparent colored central area is substantially the size and shape of the pupil of the eye and said circular semi-transparent area is substantially the size and shape of the iris of the eye.

4. The contact lens of any preceding claim, wherein said light reflecting particles comprise from 0.1% to 5% by weight of the total lens weight.

5. A method of making a cosmetic contact lens blank from which a contact lens as defined in Claim 1 can be cut, comprising the steps of:

forming an open topped cylinder (1) having an inside diameter approximately equal to the diameter of the desired lens pupil and an outside diameter approximately equal to the diameter of the desired lens iris from a mixture of a transparent monomer, a transparent colorant and light reflecting particles;

filling the cylinder with a mixture (3) of a transparent monomer and a transparent colorant;

polymerizing the monomer; and

cutting the cylinder into discs.

6. The method of Claim 5, further including:

casting a transparent monomer layer (4) around the cylinder.

7. The method of Claim 5 or Claim 6, wherein the monomer is hydroxyethyl methacrylate.

8. The method of any one of Claims 5—7 wherein the light reflecting particles are finely ground oyster shells.

9. The method of any one of Claims 5—8 further including:

adding antimicrobial agents to the monomer.

10. A method of making a cosmetic contact lens blunk from which a contact lens as defined in Claim 1 can be cut, comprising the steps of:

forming a transparent colored cylindrical rod by polymerizing mixture of a monomer and colorant;

casting a semi-transparent cylinder around the rod, the cylinder being formed by polymerizing a mixture of a monomer, colorant and light reflecting particles; and

cutting the cylinder into discs.

11. The method of Claim 10 further including:

casting a monomer layer around the semi-transparent cylinder.

12. The method of Claim 10 or Claim 11, wherein the monomer is hydroxyethyl methacrylate.

13. The method of any one of Claims 10—12, wherein the light reflecting particles are finely ground oyster shells.

14. The method of any one of Claims 10—13 further including:

adding antimicrobial agents to the monomer.

**Patentansprüche**

1. Kosmetische Kontaktlinse, die die sichtbare Farbe des Auges, auf dem sie getragen wird, verändert, umfassend:

einen kreisförmigen, transparenten, farbigen, zentralen Bereich; und

einen kreisförmigen, halbtransparenten Bereich, der den genannten kreisförmigen, transparenten, farbigen, zentralen Bereich umgibt, wobei der genannte kreisförmige halbtransparente Bereich ein transparentes färbiges Material umfaßt, in dem eine Vielzahl von lichtreflektierenden Teilchen dispergiert ist und die in einem solchen Abstand voneinander angeordnet sind, daß der Lichtdurchlaßgrad des halbtransparenten Bereiches von etwa 90% bis 50% jenes des transparenten, farbigen, zentralen Bereiches beträgt und daß etwa 10% bis 50% des Lichtes, das in den genannten halbtransparenten Bereich eintritt, von der Linse durch die genannten lichtreflektierenden Teilchen reflektiert wird, wodurch das reflektierte Licht die Farbe des genannten transparenten färbigen Materials aufweist, indem die genannten lichtreflektierenden Teilchen dispergiert sind.

2. Kontaktlinse nach Anspruch 1, weiters umfassend einen kreisförmigen, klaren, transparenten Bereich, der den genannten kreisförmigen halbtransparenten Bereich umgibt.

3. Kontaktlinse nach Anspruch 1 oder 2, worin die genannte kreisförmige transparente färbige zentrale Bereich im wesentlichen die Größe und Form der Pupille des Auges aufweist und der genannte kreisförmige halbtransparente Bereich im wesentlichen die Größe und Form der Iris des Auges aufweist.

4. Kontaktlinse nach einem der vorhergehenden Ansprüche, worin die genannten lichtreflektierenden Teilchen 0,1 bis 5 Gew.-% des Gesamtgewichtes der Linse umfassen.

5. Verfahren zur Herstellung eines Rohlings für kosmetische Kontaktlinsen, aus dem eine Kontaktlinse nach Anspruch 1 geschnitten werden kann, umfassend die Schritte:

Formen eines Zylinders (1) mit offener Oberseite, dessen licht Weite annähernd gleich dem Durchmesser der gewünschten Linsenpupille ist und dessen Außendurchmesser annähernd gleich dem Durchmesser der gewünschten Linseniris ist, aus einer Mischung aus einem transparenten Monomer, einem transparenten Farbstoff und lichtreflektierenden Teilchen;

Füllen des Zylinders mit einer Mischung (3) aus einem transparenten Monomer und einem transparenten Farbstoff;

Polymerisieren des Monomers; und

Schneiden des Zylinders in Scheiden.

6. Verfahren nach Anspruch 5, weiters umfassend:

Gießen einer transparenten Monomerschicht (4) um den Zylinder herum.

7. Verfahren nach Anspruch 5 oder 6, worin das Monomer Hydroxyäthylmethacrylat ist.

8. Verfahren nach einem der Ansprüche 5 bis 7, worin die lichtreflektierenden Teilchen fein gemahlene Austermuschelschalen sind.

9. Verfahren nach einem der Ansprüche 5 bis 8, weiters umfassend:

Versetzen des Monomers mit antimikrobiellen Mitteln.

10. Verfahren zur Herstellung eines Rohlings für kosmetische Kontaktlinsen, aus dem eine Kontaktlinse nach Anspruch 1 geschnitten werden kann, umfassend die Schritte:

Formen eines transparenten färbigen zylindrischen Stabes durch Polymerisieren einer Mischung aus einem Monomer und einem Farbstoff;

Gießen eines halbtransparenten Zylinders um den Stab herum, wobei der Zylinder durch Polymerisieren einer Mischung aus einem Monomer, einem Farbstoff und von lichtreflektierenden Teilchen gebildet wird; und

Schneiden des Zylinders in Scheiben.

11. Verfahren nach Anspruch 10, weiters umfassend:

Gießen einer Monomerschicht um den halbtransparenten Zylinder herum.

12. Verfahren nach Anspruch 10 oder 11, worin das Monomer Hydroxyäthylmethacrylat ist.

13. Verfahren nach einem der Ansprüche 10 bis 12, worin die lichtreflektierenden Teilchen fein gemahlene Austernmuschelschalen sind.

14. Verfahren nach einem der Ansprüche 10 bis 13, weiters umfassend:

Versetzen des Monomers mit antimikrobiellen Mitteln.

**Revendications**

1. Lentille de contact cosmétique qui modifie la couleur apparente de l'oeil sur lequel elle est portée, comprenant:

une aire centrale colorée transparente, circulaire; et

une aire semi-transparente circulaire entourant l'aire centrale colorée transparente, circulaire, cette aire semi-transparente circulaire comprenant une matière colorée transparente comportant une série de particules réfléchissant la lumière dispersées dans celle-ci et espacées l'une de l'autre de telle sorte que la transmission de l'aire semi-transparente soit d'environ 90% à 50% de celle de l'aire centrale colorée transparente et qu'environ 10 à 50% de la lumière entrant dans l'aire semi-transparente précitée soient réfléchis de la lentille par les particules réfléchissant la lumière, de manière à ce que la lumière réfléchie ait la couleur de la matière colorée transparente dans laquelle les particules réfléchissant la lumière sont dispersées.

2. Lentille de contact suivant la revendication 1, comprenant en outre une aire transparente claire circulaire entourant l'aire semi-transparente circulaire précitée.

3. Lentille de contact suivant l'une ou l'autre des revendications 1 et 2, caractérisée en ce que l'aire centrale colorée transparente circulaire a essentiellement la taille et la forme de la pupille de l'oeil et en ce que l'aire semi-transparente circulaire a essentiellment la taille et la forme de l'iris de l'oeil.

4. Lentille de contact suivant l'une quelconque des revendications précédentes, caractérisée en ce que les particules réfléchissant la lumière constituent de 0,1% à 5% en poids du poids total de la lentille.

5. Procédé de fabrication d'un flan de lentille de contact cosmétique à partir duquel une lentille de contact telle que définie à la revendication 1, peut être découpée, comprenant les étapes:

de formation d'un cylindre à extrémité supérieure ouvertre (1) comportant un diamètre intérieur approximativement égal au diamètre de la pupille de lentille désirée et un diamètre extérieur approximativement égal au diamètre de l'iris de lentille désiré à partir d'un mélange d'un monomère transparent, d'un colorant transparent et de particules réfléchissant la lumière;

de remplissage du cylindre par un mélange (3) d'un monomère transparent et d'un colorant transparent;

de polymérisation du monomère; et

de découpage du cylindre en disques.

6. Procédé suivant la revendication 5, comprenant en outre:

la coulée d'une couche de monomère transparente (4) autour du cylindre.

7. Procédé suivant l'une ou l'autre des revendications 5 et 6, caractérisé en ce que le monomère est le méthacrylate d'hydroxyéthyle.

8. Procédé suivant l'une quelconque des revendications 5—7, caractérisé en ce que les particules réfléchissant la lumière sont des coquilles d'huîtres finement broyées.

9. Procédé suivant l'une quelconque des revendications 5—8, comprenant en outre:

l'addition d'agents antimicrobiens au monomère.

10. Procédé de fabrication d'un flan de lentille de contact cosmétique à partir duquel une lentille de contact telle que définie à la revendication 1, peut être découpée, comprenant les étapes:

de formation d'une baguette cylindrique colorée transparente par la polymérisation d'un mélange d'un monomère et d'un colorant;

de coulée d'un cylindre semi-transparent autour de la baguette, le cylindre étant formé par la polymérisation d'un mélange d'un monomère, d'un colorant et de particules réfléchissant la lumière; et

de découpage du cylindre en disques.

11. Procédé suivant la revendication 10, comprenant en outre:

la coulée d'une couche de monomère autour du cylindre semi-transparent.

12. Procédé suivant l'une ou l'autre des revendications 10 et 11, caractérisé en ce que le monomère est le méthacrylate d'hydroxyéthyle.

13. Procédé suivant l'une quelconque des revendications 10—12, caractérisé en ce que les particules réfléchissant la lumière sont des coquilles d'huîtres finement broyées.

14. Procédé suivant l'une quelconque des revendications 10—13, comprenant en outre:

l'addition d'agents antimicrobiens au monomère.

FIG 1

FIG 2

FIG 5

FIG 3

FIG 4

FIG 6